# EUROPEAN PATENT APPLICATION

(11) **EP 2 658 345 A2**
(43) Date of publication of application: **30.10.2013**
(21) Application number: 13158170.4
(22) Date of filing: 07.03.2013
(51) Int. Cl.: H05B 33/08

(54) **Power supply device and control method for luminaire**

(30) Priority: 26.04.2012 JP 2012101531
(71) Applicant: Toshiba Lighting & Technology Corporation, Yokosuka-shi Kanagawa 237-8510 (JP)
(72) Inventor: Iwai, Naoko, Kanagawa, 237-8510 (JP); Kosa, Kiyoteru, Kanagawa, 237-8510 (JP); Ishikita, Toru, Kanagawa, 237-8510 (JP); Kowada, Takao, Kanagawa, 237-8510 (JP); Kan, Hiroya, Kanagawa, 237-8510 (JP); Saito, Yosuke, Kanagawa, 237-8510 (JP)
(74) Representative: Bokinge, Ole

(57) **Abstract**

According to one embodiment, a control circuit detects power supply voltages converted by switching elements for conversion and subjects the switching elements for conversion to feedback control. The control circuit subjects all of a switching element for power factor improvement and a plurality of the switching elements for conversion to switching control at different switching frequencies.

## Description

### FIELD

Embodiments described herein relate generally to a power supply device for supplying electric power to a load, and a luminaire employing the power supply device.

### BACKGROUND

For example, in a power supply device that supplies electric power to a load functioning as a light source, alternating-current power is rectified by a rectifying circuit and a rectified power supply voltage is converted by a switching operation of a switching element for conversion included in a power supply voltage converting circuit and supplied to the light source to light the light source. A power factor improving circuit including a switching element for power factor improvement configured to step up the rectified power supply voltage and output the power supply voltage to the power supply voltage converting circuit is sometimes used.

In the power supply device, in order to keep the brightness of the light source constant, the power supply voltage converted by the switching element for conversion of the power supply voltage converting circuit is detected and the switching element for conversion is subjected to feedback control.

There is a power supply device including a plurality of light source circuits and a power supply voltage converting circuit provided for each of the plurality of light source circuits. The power supply device has an object of reducing noise intensity as a whole. A switching frequency for causing the switching element for conversion of at least one power supply voltage converting circuit to perform a switching operation is changed at random.

However, if the power supply device includes a plurality of switching elements and the plurality of switching elements are mounted on the same substrate, since a ground line is common, noise that occurs when the switching elements are turned on and off tends to affect all electric elements on the substrate.

When the power supply voltage converted by the switching element for conversion is detected and the switching element for conversion is subjected to the feedback control, if switching frequencies of the switching elements are the same, noise is superimposed on the power supply voltage when the power supply voltage is detected. The switching element for conversion is subjected to the feedback control on the basis of the power supply voltage affected by the noise. Therefore, it is likely that proper feedback control cannot be performed and flickering occurs in the brightness of the light source.

There is a power supply device that changes switching frequencies of a plurality of switching elements for conversion at random. However, a circuit is complicated to configure the power supply device. Further, it is likely that the brightness of the light source changes according to the change of the switching frequencies. Moreover, if the power factor improving circuit is used, the influence of noise caused by the switching element for power factor improvement cannot be suppressed.

### DESCRIPTION OF THE DRAWINGS

FIG. 1 is a circuit diagram of a power supply device according to an embodiment;
FIG. 2 is a perspective view of a luminaire in which the power supply device is used;
FIG. 3 is a waveform chart of output voltages of switching elements in the case in which all the switching elements are subjected to switching control at different switching frequencies by a control circuit of the power supply device;
FIG. 4 is a waveform chart of output voltages of switching elements for conversion in the case in which switching frequencies of the switching elements for conversion are the same and phases thereof are the same; and
FIG. 5 is a waveform chart of output voltages of the switching elements for conversion in the case in which switching frequencies of the switching elements for conversion are the same and phases thereof are shifted by 180° from each other.

### DETAILED DESCRIPTION

According to an embodiment, a power supply device includes a rectifying circuit, a power factor improving circuit, a power supply voltage converting section, and a control circuit. The rectifying circuit rectifies alternating-current electric power. The power factor improving circuit includes a switching element for power factor improvement configured to step up a power supply voltage rectified by the rectifying circuit. Loads are respectively connected to a plurality of output sections. The power supply voltage converting section includes a plurality of power supply voltage converting circuits provided between the power factor improving circuit and the plurality of output sections. The power supply voltage converting circuits include switching elements for conversion configured to convert the power supply voltage output from the power factor improving circuit and supply power supply voltages to the loads. The control circuit detects power supply voltages converted by the switching elements for conversion, subjects the switching elements for conversion to feedback control, and subjects all of the switching element for power factor improvement and a plurality of the switching elements for conversion to switching control at different switching frequencies.

Since all of the switching element for power factor improvement and the plurality of switching elements for conversion are subjected to the switching control at different switching frequencies, in detecting the power supply voltages converted by the switching elements for conversion and subjecting the switching elements for conversion to the feedback control, it is possible to reduce the influence of noise caused by ON and OFF of the switching elements and keep outputs of the loads constant.

An embodiment is explained with reference to the drawings.

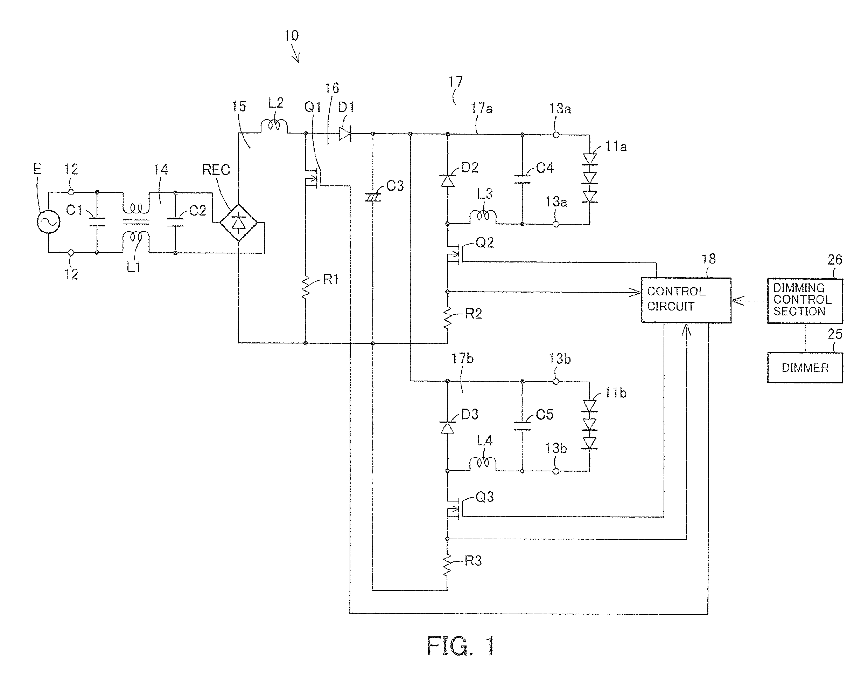

In FIG. 1, a power supply device 10 is connected to an alternating-current power supply E, which is a commercial alternating-current power supply. The power supply device 10 supplies electric power to a plurality of LED elements 11a and 11b, which are light sources functioning as a plurality of loads, divided into a plurality of load circuits and lights the LED elements 11a and 11b. The power supply device 10 can be applied to luminaires including the LED elements 11a and 11b, which are a plurality of load circuits, such as a ceiling light, a base light, and a down light.

The power supply device 10 includes common input sections 12 connected to the alternating-current power supply E, a plurality of output sections 13a and 13b to which the LED elements 11a and 11b are connected, a common filter circuit 14 connected to the input sections 12, a common rectifying circuit 15 connected to the filter circuit 14, a common power factor improving circuit 16 connected to an output side of the rectifying circuit 15, a power supply voltage converting circuit 17 including power supply voltage converting circuits 17a and 17b connected between an output side of the power factor improving circuit 16 and the output sections 13a and 13b, and a control circuit 18 configured to control the power factor improving circuit 16 and the power supply voltage converting circuits 17a and 17b.

In this embodiment, the power supply device 10 includes a pair of each of the LED elements 11a and 11b, the output sections 13a and 13b, and the power supply voltage converting circuits 17a and 17b, which are a first LED element 11a and a second LED element 11b, a first output section 13a and a second output section 13b, a first power supply voltage converting circuit 17a and a second power supply voltage converting circuit 17b.

The filter circuit 14 includes a capacitor C1, an inductor L1, and a capacitor C2 connected to a pair of input sections 12 in parallel. The filter circuit 14 reduces a noise component input from the alternating-current power supply E side and a noise component output to the alternating-current power supply E side.

A full-wave rectifier REC is used as the rectifying circuit 15. An input end of the full-wave rectifier REC is connected to an output end of the filter circuit 14. An input side of the power factor improving circuit 16 is connected to an output end of the full-wave rectifier REC.

The power factor improving circuit 16 is configured by a rising voltage chopper circuit configured to step up a power supply voltage rectified by the rectifying circuit 15 to a predetermined power supply voltage. A series circuit of a chopper choke L2, a switching element Q1 for power factor improvement such as a MOSFET, and a resistor R1 is connected to an output end of the full-wave rectifier REC. A series circuit of a diode D1 and a smoothing capacitor C3 is connected in parallel to the series circuit of the switching element for power factor improvement Q1 and the resistor R1.

The power supply voltage converting circuits 17a and 17b have a basic configuration in common. The power supply voltage converting circuits 17a and 17b are configured by a DC-DC converter such as a falling voltage chopper circuit configured to step down the power supply voltage stepped up by the power factor improving circuit 16 to a predetermined power supply voltage and output power supply voltages to the LED elements 11a and 11b. The power supply voltage converting circuits 17a and 17b respectively include series circuits of diodes D2 and D3, switching elements for conversion Q2 and Q3 such as MOSFETs, and resistors R2 and R3 connected to both ends of the smoothing capacitor C3 in parallel. Further, the power supply voltage converting circuits 17a and 17b respectively include inductors L3 and L4, input ends of which are connected between the diodes D2 and D3 and drains of the switching elements for conversion Q2 and Q3, and smoothing capacitors C4 and C5 connected to output ends of the inductors L3 and L4 and connected to the output sections 13a and 13b in parallel.

The control circuit 18 is configured by, for example, an IC. The control circuit 18 is connected to gates of the switching elements Q1, Q2, and Q3 and controls switching operations of the switching elements Q1, Q2, and Q3. Further, the control circuit 18 detects power supply voltages converted by the switching elements for conversion Q2 and Q3 from connecting points of sources of the switching elements for conversion Q2 and Q3 and the resistors R2 and R3 and subjects the switching elements for conversion Q2 and Q3 to feedback control.

The control circuit 18 fixes switching frequencies of the switching element for power factor improvement Q1 and the plurality of switching elements for conversion Q2 and Q3. However, the control circuit 18 sets all of the switching element for power factor improvement Q1 and the plurality of switching elements for conversion Q2 and Q3 to different switching frequencies and subjects the switching elements to switching control.

Further, when the control circuit 18 detects the power supply voltages converted by the switching elements for conversion Q2 and Q3, if noise is superimposed on the power supply voltages, the control circuit 18 performs processing for disabling the detected power supply voltages. For example, if the detected power supply voltages exceed a threshold set in advance, the control circuit 18 can determine that noise is superimposed on the power supply voltages.

A dimming signal from a dimmer 25 arranged on the outside is input to the control circuit 18 through a dimming control section 26. The control circuit 18 subjects the switching elements for conversion Q2 and Q3 to PWM control on the basis of the dimming signal and controls ratios of ON and OFF of the switching elements for conversion Q2 and Q3 to thereby control electric currents flowing to the LED elements 11a and 11b and adjust brightness of light emission of the LED elements 11a and 11b.

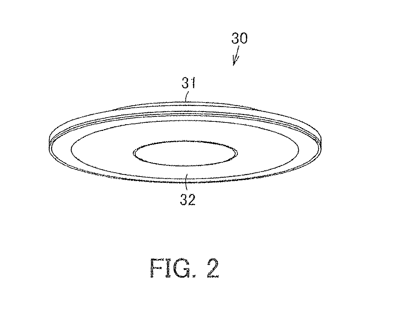

A luminaire 30 including the power supply device 10 is shown in FIG. 2. The luminaire 30 is a ceiling light and includes a disc-like luminaire main body 31 and a globe 32 configured to cover the entire lower surface of the luminaire main body 31. On the lower surface of the luminaire main body 31, an LED module including the LED elements 11a and 11b, a reflector configured to control luminous intensity distributions of lights generated by the LED elements 11a and 11b, the power supply device 10 housed in the reflector, and the like are arranged.

The operation of the power supply device 10 is explained.

When the alternating-current power supply E is turned on, a power supply voltage rectified by the full-wave rectifier REC is input to the power factor improving circuit 16 through the filter circuit 14.

In the power factor improving circuit 16, the switching element for power factor improvement Q1 is turned on and off by the control circuit 18 at a switching frequency set in advance. Consequently, the power supply voltage rectified by the full-wave rectifier REC is stepped up to a predetermined power supply voltage. Moreover, the stepped up power supply voltage is smoothed by the smoothing capacitor C3, and supplied to the power supply voltage converting circuits 17a and 17b.

In the power supply voltage converting circuits 17a and 17b, the switching elements for conversion Q2 and Q3 are turned on and off by the control circuit 18 at a switching frequency set in advance. Consequently, the power supply voltage supplied to the power supply voltage converting circuits 17a and 17b is stepped down to a predetermined power supply voltage. The stepped-down power supply voltage is supplied to the LED elements 11a and 11b. The LED elements 11a and 11b are lit.

The control circuit 18 detects power supply voltages converted by the switching elements for conversion Q2 and Q3 (hereinafter referred to as output voltages) and subjects the switching elements for conversion Q2 and Q3 to feedback control such that the output voltages supplied to the LED elements 11a and 11b are fixed.

The control circuit 18 fixes switching frequencies of the switching element for power factor improvement Q1 and the plurality of switching elements for conversion Q2 and Q3. However, the control circuit 18 sets all of the switching element for power factor improvement Q1 and the plurality of switching elements for conversion Q2 and Q3 to different switching frequencies and subjects the switching elements to switching control.

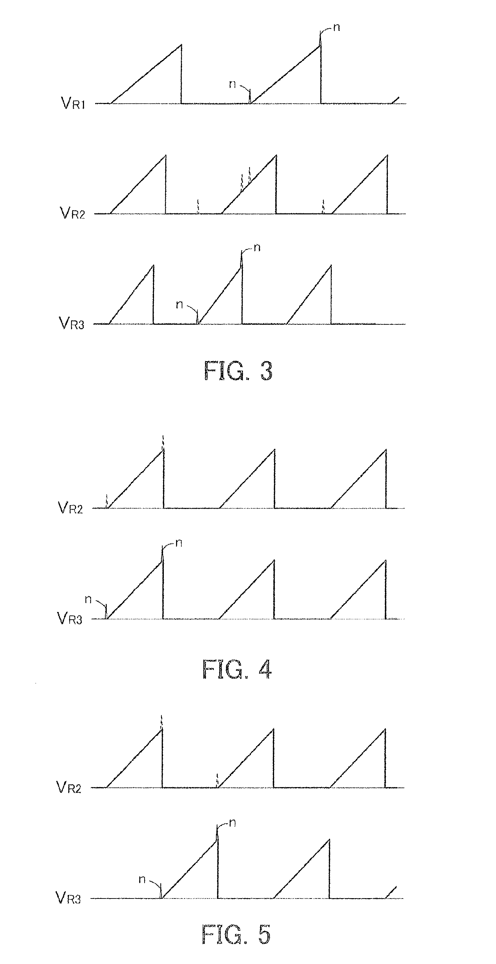

FIG. 3 is a waveform chart of output voltages of the switching elements Q1, Q2, and Q3 in the case in which all of the switching elements Q1, Q2, and Q3 are subjected to switching control at different switching frequencies by the control circuit 18 of the power supply device 10. An output voltage of the switching element for power factor improvement Q1 (a voltage of the resistor R1) is represented as V_{R1}, an output voltage of the switching element for conversion Q2 (a voltage of the resistor R2) is represented as V_{R2}, and an output voltage of the switching element for conversion Q3 (a voltage of the resistor R3) is represented as V_{R3}. In a state shown in FIG. 3, during starting, after first voltage waveforms of the output voltages simultaneously rise, phases of the voltage waveforms are shifted according to the switching frequencies.

When noise occurs during turning on and off of the switching elements Q1, Q2, and Q3, if the plurality of the switching elements Q1, Q2, and Q3 are mounted on the same substrate, since a ground line are common, the noise is superimposed on all power supply voltages on the substrate.

As shown in FIG. 4, if it is assumed that switching frequencies of the switching elements for conversion Q2 and Q3 are the same and phases of the switching elements for conversion Q2 and Q3 are also the same, for example, when a rising edge and a peak of the output voltage V_{R2} of the switching element for conversion Q2 are detected, noise n that occurs during turning on and off of the switching element for conversion Q3 is superimposed on the output voltage V_{R2}. The switching element for conversion Q2 is subjected to feedback control on the basis of the output voltage V_{R2} affected by the noise n. Therefore, it is likely that proper feedback control cannot be performed and flickering occurs in the brightness of the LED element 11a. Similarly, when a rising edge and a peak of the output voltage V_{R3} of the switching element for conversion Q3 are detected, noise that occurs during turning on and off of the switching element for conversion Q2 affects the output voltage V_{R3}.

As shown in FIG. 5, if it is assumed that switching frequencies of the switching elements for conversion Q2 and Q3 are the same and phases of the switching elements for conversion Q2 and Q3 are shifted 180° from each other, for example, when a rising edge and a peak of the output voltage V_{R2} of the switching element for conversion Q2 are detected, the noise n that occurs during turning on and off of the switching element for conversion Q3 is superimposed on the output voltage V_{R2}. The switching element for conversion Q2 is subjected to feedback control on the basis of the output voltage V_{R2} affected by the noise n. Therefore, it is likely that proper feedback control cannot be performed and flickering occurs in the brightness of the LED element 11a. Similarly, when a rising edge and a peak of the output voltage V_{R3} of the switching element for conversion Q3 are detected, noise that occurs during turning on and off of the switching element for conversion Q2 affects the output voltage V_{R3}.

Further, if switching frequencies of the switching element for power factor improvement Q1 and the switching elements for conversion Q2 and Q3 are the same, when the output voltages V_{R2} and V_{R3} of the switching elements for conversion Q2 and Q3 are detected, noise that occurs during turning on and off of the switching element for power factor improvement Q1 affects the output voltages V_{R2} and V_{R3}.

On the other hand, in this embodiment, as shown in FIG. 3, all of the switching element for power factor improvement Q1 and the plurality of switching elements for conversion Q2 and Q3 are subjected to switching control at different switching frequencies. Therefore, for example, when a rising edge and a peak of the output voltage V_{R2} of the switching element for conversion Q2 are detected, the noise n that occurs during turning on and off of the switching element for power factor improvement Q1 and the switching element for conversion Q3 is less easily superimposed on the output voltage V_{R2}. Therefore, it is possible to subject the switching element for conversion Q2 to feedback control on the basis of the output voltage V_{R2} not affected by the noise n. It is possible to perform proper feedback control and keep the brightness of the LED element 11a constant. Similarly, when a rising edge and a peak of the output voltage V_{R3} of the switching element for conversion Q3 are detected, it is possible to reduce the influence of noise that occurs during turning on and off of the switching element for conversion Q2.

Even if all of the switching element for power factor improvement Q1 and the plurality of switching elements for conversion Q2 and Q3 are subjected to switching control at different switching frequencies, in some case, timings for turning on and off the switching elements Q1, Q2, and Q3 coincide with each other and, when output voltages of the switching elements for conversion Q2 and Q3 are detected, noise affects the output voltages.

In such a case, when output voltages of the switching elements for conversion Q2 and Q3 are detected, if noise is superimposed on the output voltages, the control circuit 18 performs processing for disabling the detected output voltages. For example, if the detected output voltages exceed a threshold set in advance, the control circuit 18 determines that noise is superimposed on the output voltages, does not perform feedback control based on the detected output voltages, and continues the last feedback control. If output voltages not affected by noise are detected, the control circuit 18 performs the feedback control on the basis of the output voltages. Consequently, it is possible to prevent flickering from occurring in the brightness of the LED elements 11a and 11b.

When the dimmer 25 is operated, a dimming signal from the dimmer 25 is input to the control circuit 18 through the dimming control section 26. The control circuit 18 controls, on the basis of the input dimming signal, ratios of ON and OFF of PWM signals output to the switching elements for conversion Q2 and Q3 to thereby dim the LED elements 11a and 11b.

In this case, for example, as shown in FIG. 3, even if switching frequencies of the switching elements for conversion Q2 and Q3 are different, the ratios of ON and OFF of the PWM signals are the same. Consequently, it is possible to subject the LED elements 11a and 11b to dimming control irrespective of the switching frequencies of the switching elements for conversion Q2 and Q3.

As explained above, with the power supply device 10 according to this embodiment, all of the switching element for power factor improvement Q1 and the plurality of switching elements for conversion Q2 and Q3 are subjected to switching control at different switching frequencies. Therefore, in detecting power supply voltages converted by the switching elements for conversion Q2 and Q3 and subjecting the switching elements for conversion Q2 and Q3 to feedback control, it is possible to reduce the influence of noise that occurs according to turning on and off of the switching elements Q1, Q2, and Q3 and keep outputs of the LED elements 11a and 11b constant. Therefore, it is possible to prevent the brightness of the LED elements 11a and 11b from flickering.

When output voltages of the switching elements for conversion Q2 and Q3 are detected, if noise is superimposed on the output voltages, processing for disabling the detected output voltages is performed. Therefore, it is possible to prevent the brightness of the LED elements 11a and 11b from flickering.

In this embodiment, the pair of each of the LED elements 11a and 11b, the output sections 13a and 13b, and the power supply voltage converting circuits 17a and 17b are provided. However, a trio of each of the LED elements, the output sections, and the power supply voltage converting circuits may be provided.

The loads are not limited to the LED elements 11a and 11b and may be other light sources such as an EL element or may be electric devices other than the light sources.

While certain embodiments have been described, these embodiments have been presented by way of example only, and are not intended to limit the scope of the inventions. Indeed, the novel embodiments described herein may be embodied in a variety of other forms; furthermore, various omissions, substitutions, and changes in the form of the embodiments described herein may be made without departing from the spirit of the inventions. The accompanying claims and their equivalents are intended to cover such forms or modifications as would fall within the scope and spirit of the inventions.

## Claims

1. A power supply device comprising:
a rectifying circuit (15) configured to rectify alternating-current electric power;
a power factor improving circuit (16) including a switching element for power factor improvement (Q1) configured to step up a power supply voltage rectified by the rectifying circuit (15);
a plurality of output sections (13a, 13b) to which loads (11a, 11b) are respectively connected;
a power supply voltage converting section (17) including a plurality of power supply voltage converting circuits (17a, 17b) provided between the power factor improving circuit (16) and the plurality of output sections (13a, 13b), the power supply voltage converting circuits (17a, 17b) including switching elements for conversion (Q2, Q3) configured to convert the power supply voltage output from the power factor improving circuit (16) and supply power supply voltages to the loads (11a, 11b); and
a control circuit (18) configured to detect power supply voltages converted by the switching elements for conversion (Q2, Q3), subject the switching elements for conversion (Q2, Q3) to feedback control, and subject all of the switching element for power factor improvement (Q1) and the plurality of switching elements for conversion (Q2, Q3) to switching control at different switching frequencies.

2. The device according to claim 1, wherein, when the power supply voltages converted by the switching elements for conversion (Q2, Q3) are detected, if noise is superimposed on the power supply voltages, the control circuit (18) disables the detected power supply voltages.

3. A luminaire comprising:
the power supply device (10) according to claim 1 or 2; and
light sources (11a, 11b) functioning as the loads of the power supply device (10).
